# EUROPEAN PATENT APPLICATION

(11) **EP 1 132 317 A1**
(43) Date of publication of application: **12.09.2001**
(21) Application number: 00200867.0
(22) Date of filing: 10.03.2000
(51) Int. Cl.: B65D 81/34

(54) **Susceptor for heating a garnished flat dough in microwave oven**

(71) Applicant: SOCIETE DES PRODUITS NESTLE S.A., 1800 Vevey (CH)
(72) Inventor: Aronsson, Solveig, 226 47 Lund (SE); Wikström, Katarina, 226 52 Lund (SE)
(74) Representative: Borne, Patrice Daniel

(57) **Abstract**

The invention relates to a susceptor (1) for use as a support for heating a garnished flat dough (3) in a microwave oven comprising a metallized plate, characterised in that the plate comprises a plurality of apertures (10) forming gas and microwave energy permeable areas which are evenly or randomly disposed in the peripheral area of the plate; with each apertures (10) having a transverse dimension of at least 5mm.

## Description

The present invention relates to a susceptor which produces thermal heating for a garnished flat raw dough disposed thereon when exposed in a microwave energy field and which improves the cooking, browning and crisping of the bread in a more natural manner close to the heating effect that is produced in conventional ovens.

Microwave ovens often provide a quick and convenient way of cooking and heating food substances. Microwave oven typically heats food substances more quickly than a conventional oven even those using forced convection. However, microwave energy heats the food product differently from a conventional oven. In a conventional oven, the high temperature atmosphere impinges on the surface of the food product, causing the surface to heat first. Moisture is driven from the exterior of the food product by the hot oven atmosphere which results in a progressive moisture evaporation at the surface of the product and consequently in a proper and homogeneous browning and crisping of the full product. The heat transfer is so realised from the periphery to the centre of the product by slow heat transfer mechanisms especially by conduction transfer. As a result, the product can be made fully cooked in the middle and browned on surface.

Heating in microwave oven involves different phenomena. A microwave oven generates high intensity, high frequency electromagnetic radiation that penetrates into the food product. Heating occurs when the food product absorbs the electromagnetic energy. The wave absorption at the surface of the product is insufficient to provoke a superficial browning of the product. In addition, during the microwave heating, the moisture is also transferred from the interior to the exterior of the product due to the evaporation of the free water contained therein. In particular with dough based products, the heating effects of microwave energy penetrate to a much greater depth toward the centre of the food product than in the case of conventional heating. As a result, the middle of the food product will be heated much more quickly while the surface will be not heated sufficiently to generate non-enzymatic browning reactions and to achieve desirable crispness. The problem of heating in microwave ovens is even exacerbated in the particular case of frozen food products such as frozen uncooked pizzas and the like. Frozen products comprise an amount of frozen water molecules and frozen fat molecules which are less sensitive to the microwave energy than the non-frozen part of the molecular system. As a result, the product has a tendency to heat in a non-homogeneous manner and zones of the product may frequently be still in frozen state while other parts are fully cooked.

In an attempt to overcome the drawbacks of the microwave heating, susceptors have been developed which are usually added in the packaging of the food product. In the particular domain of garnished flat dough products such as pizzas, plate-like susceptors are known that are generally disposed underneath as a support for the dough which converts microwave energy into thermal energy. The thermal energy produces browning and crisping of the food item situated directly in contact with it. A typical susceptor includes a thin layer of microwave-interactive plastic such as aluminium deposited on a foodgrade plastic surface. Most often, a sheet of thick paper or cardboard further reinforces the susceptor bonded underneath, incidentally to confer sufficient rigidity to hold the food product.

US Patent 4,896,009 provides a susceptor for food items wherein the base laminate contains gas permeable means such as holes that are located in the immediate area of the centre of the base laminate. According to the patent's disclosure, the holes of an average diameter of 3/8 inch are produced to allow venting of gases and vapours which improves browning and crisping of the crust.

However, several drawbacks remain when heating an uncooked flat dough type of product such as pizza or pizza-like products in a microwave oven. Indeed, we have surprisingly noticed that the dough had a heating pattern that was not uniform along its bottom surface. Due in particular to the direct contact of the dough surface with the susceptor which applies a relatively high burning effect by conduction, the dough experiences a relatively low rising, an overburning and consequently a drying and, particularly along the rim or edges of the crust. Without being bound to theory, it is assumed that the region of the rim of the dough is spaced from the centre of the dough by about half the wavelength and therefore these both regions concentrate a larger amount of microwave energy than the region in-between. The problem is critical in the microwave ovens having a single microwave inlet but it is still present in microwave ovens with more than one microwave inlet. As a result of this uneven heating pattern, the undersurface of the crust in the rim area forms an excessive browned band which remains flat and hard with a texture similar to a "cracker" as opposed to a pizza crust heated in a conventional oven in which the rim has nicely risen and remains crispy at the surface but still relatively soft inside. In final, we have noticed that the consumer very often gives a negative and severe judgement when he cannot properly bite in the rim or when he cannot cut the product with a knife because the rim is too hard and carton-like. Therefore, special attention is required to get consumer's acceptance and to bring the final texture closer to the one of a traditional pizza-type product when baked in a conventional oven.

Moreover, a pizza crust as obtained from a susceptor such as the one of US 4,896,009 also looks undesirably burned underneath all over the rim of the dough while the centre part of the dough looks relatively uncooked because of the presence of relatively large holes in these areas. It is believed that although venting in the middle is well provided, the presence of large holes in the middle causes the crust to heat less rapidly than in the region of the edges which come more quickly to a sufficient degree of cooking. Therefore, the crust as obtained does not fit the normal standard of conventional pizza-type products that is required to gain a large consumer's acceptance.

A similar approach is described in EP 0 943 558 A2 which relates to an imperforate susceptor in which transparent microwave zones are provided in the central region of the susceptor. As opposed to US patent 4,896,009, the transparent areas are preferably not gas permeable means but inactivated metallized areas or non-metallized areas of the susceptor. This solution is not well adapted to bake frozen raw dough as it does not solve the "cracker-like" texture of the rim but even makes the heating still more unsatisfactory since contrary to the previous patent reference, the venting of the centre part of the pizza is no longer obtained. If the water vapour cannot evacuate under the pizza, the crust becomes soggy and moist at the bottom. This undesirable phenomenon is further enhanced as the centre has a plurality of non-reactive areas to the microwave field, which forms white crust areas with a soggy and soft texture.

The present invention aims to solve the above-mentioned problems. In particular, it is an object of the invention to provide a susceptor for use in microwave heating of a garnished flat raw dough product such as an uncooked pizza or pizza-like products that preserves, after heating in the microwave oven, the characteristics of a well cooked, well brown and crispy product and especially, improves the texture and appearance of the crust all over the dough product. In particular, one important objective is to obtain a properly raised, crispy but well developed internal sponge-like texture of the rim of the dough which is similar in quality a dough baked in traditional household ovens or pizzeria ovens.

It is also an objective to provide a susceptor for creating a naturally uneven browning of the garnished flat dough which looks similar to the results which may be obtained in conventional ovens.

It is also an objective to provide a solution that is sufficiently economical to be inserted as a part of the package in which the garnished flat dough is wrapped or packaged for sale.

This invention is an improvement in the typical microwave susceptor for use as a support for producing a garnished flat bread such as a pizza, by baking a pregarnished raw dough in a microwave oven. The susceptor comprises a metallized plate. The plate comprises a plurality of apertures forming gas and microwave energy permeable areas which are evenly or randomly disposed in the peripheral area of the plate; with each aperture having a transverse dimension of at least 5 mm.

Tests performed by the applicant have surprisingly shown that the susceptor of the invention promoted the rising of the crust rim which was advantageously increased in relatively large proportions while conferring a relatively crispy surface but still a soft and easily chewable internal texture. Furthermore, it has been proved that a critical minimal transverse dimension was necessary to achieve that beneficial result. It is theorised that due to this specific susceptor configuration, more microwave energy can be absorbed directly into the dough while proportionally less is absorbed into the reactive layer of the susceptor as less reactive surface is left available in the region of the rim of the dough. This extra-energy brought into the dough is so used in favour of a higher rising of the dough. Normally, when the dough is still raw, the dough has a foam-like structure with small, spherical gas cells dispersed throughout the dough. During dough preparation, the fermentation of the dough is carried out to promote the expansion of the gas cells. During the microwave heating, the microwave energy absorbed carries on the gas expansion of the cells until the cells break due to the gelatinization of starch and the development of cross-links between starch and the proteins, leading to a final setting of the structure. The rising effect during the baking develops an open sponge-like structure of the crust which remains relatively soft inside. According to the susceptor of the invention, the average self-rising of the dough in the region of the edges can be increased up to 50% compared to-state-of-the-art susceptors. Another beneficial effect obtained is since less heating energy comes from the susceptor, the risk of getting the bottom of the rim too dark and hard is reduced.

Therefore, the rim is only brown superficially without overburning which so promotes crispness and so preserves the natural flavour of the dough without charcoal taste. As a result, the cracker-like effect of the edges is avoided and a general positive perception of the final product is advantageously obtained.

In the description, the "transverse dimension" generally refers to the dimension of each aperture as measured from its width as transversally extending across its longer length. The geometrical shape for the apertures can be of any types. Preferably circles are preferred as one avoids angular segments which could possibly create sparks damaging for the oven. However, the apertures might also be ovals, regular or irregular polygons such as squares or rectangles, or any other arbitrary shape. For instance, if a circle, the transverse dimension measured is its diameter. If a rectangle, it will be its width. If an oval or lentil shape, the transverse dimension should be measured along its minor axis. The principle is really to allow a sufficient amount of microwave energy to be absorbed into the dough at the place of the apertures. For instance, what should not be considered as suitable for the invention would be very narrow slots or slits irrespective of their longitudinal dimension. On the other hand, it is preferred that the apertures have a maximum length equal to or lower than 15 mm, preferably lower than 10 mm for essentially keeping a sufficient heating power of the susceptor on the ring of the crust for giving the browning effect. Similarly, the transverse dimension of the apertures as measured across said length is preferably in the range of 5 to 15 mm. The optimum configuration of the apertures has been determined to be circular holes of about 7-mm diameter. Larger holes give a good rising effect but the browning is less than with smaller holes. Also for a practical reason, as the dough is intended to be pressed onto the susceptor, there is a risk that the dough enters through the holes when too large, making the product difficult to remove from the susceptor after microwave baking. The apertures are also distributed so as to respect a partition distance in the range of 10 to 38 mm. By "partition distance", we mean the distance, which separates two adjacent apertures in all possible directions as measured from the centre of the apertures. It has been found that a decrease of the distance between the apertures gives less browning and vice versa. The optimum partition distance has been determined to be about 19 mm. It has also been tested that apertures having a size lower than the required size; i.e., a transverse dimension lower than 5 mm would fail in rising properly the crust irrespective of the distance between them. In other words, an increase of the concentration of smaller holes below the area of the rim of the dough would not confer the surprising rising effect that is sought.

Preferably, the plurality of apertures is confined in the peripheral area of the plate as more particularly demarcated within a band having a predetermined width whereas the rest of the plate is free from such apertures. Indeed, contrary to the teaching of the prior art, we believe that relatively large apertures are desired along a band as defined above in order to promote the rising of the rim of the crust but conversely these large apertures are not suitable in a more centrally distributed location of the plate corresponding to the garnished central region of the product when installed thereon. The reason is that large apertures would reduce the heating power of the susceptor at the bottom of the bread under the garnishing. It would enhance the variation of cooking degree between the centre and the edges of the dough. More particularly, the risk is that at the time the edges are fully raised and brown, the centre is still insufficiently cooked and still white.

The peripheral band of the susceptor has preferably a width of about 50 mm or less, preferably of about 40 mm, and is distant from the nearest edge of the plate of about 10 to 20 mm, preferably of about 15 mm. The band as determined thereby takes into account the average dimension of the rim of the flat dough product that is intended to be pressed thereon. In general, it has been determined that for medium range garnished flat breads, such as pizzas, the rim represents about 8 to 25 mm, more preferably 10-15 mm. Therefore, at the time of the production, the dough product will be pressed onto the susceptor and garnished in such a way as to leave a dough rim of that size within the limits of the band as defined above. The dough rim will be placed so that the peripheral band of the susceptor totally encompasses the rim and preferably also further extends a short distance inwardly (about 5-20 mm). The geometry of the susceptor will generally match the geometry of the flat bread while the dimension of the susceptor will slightly extend outwardly beyond the contour of the bread of about 10-15 mm. Such uncovered free portion adjacent the edge of the susceptor is useful to maintain the susceptor in place after the removal of the pressing tool; e.g. the pressing head, that is used to press the dough ball onto the susceptor. It also permits to handle the product by the consumer more easily. The preferable form of susceptor is a disc but other possible shapes are conceivable such as squares or polygonal shapes. Discs of 200 to 230-mm diameter, preferably 220-mm are desirable to fit with flat dough products of about 180 to 210 mm, which typically meets the medium size pizzas' range. Theoretically, larger susceptors, as well as consequently larger food products, could also be envisaged but the problem is that the household microwave ovens have heating cavities that could be too small to receive them in one piece.

However, while the rim of the crust is allowed to rise properly there is still a need for avoiding the centre part or the garnished part of the product to become soggy because of a lack of moisture evacuation.

Consequently, it is preferred that the plate comprises in the central area as externally delimited by the aforementioned peripheral band a plurality of perforations to allow the water vapour and gases to escape while allowing the microwave reactive layer to perform both the crispening and browning functions. However, the perforations should preferably have a maximum transverse dimension of less than 1.5 mm, even preferably less than 1 mm, irrespective of their total length which can be of any size. Suitable perforations are slits or small holes. Slits are preferred because the dough flows easier over the slits during the pressing of the dough onto the susceptor. Therefore, the dough has less tendency to enter into the perforations and the removal of the baked product is made easier. In addition, since the degree of browning is less in the garnished part (except in the centre point), comparatively more susceptor material is needed to properly brown the dough in this area. The slits can preferably be arranged in parallel arrays of slits with each individually having length of at least 10-mm long, preferably 50 mm or longer. The slits could also encompass a wide range of shapes such as chevron or zigzag shapes, etc. The slits may be obtained just by cutting through the susceptor without removal of material thus making the width as minimal as possible and equal to the width of the cutting tool.

In a preferred aspect of the invention, the plate is constituted of a laminate comprising a receiving surface onto which is pressed the raw dough before garnishing it; said receiving surface having a food grade metallized plastic layer. The plastic may be a heat resistant plastic such as a polyester plastic film of about 12 microns. Special surface treatments of the film can be made to promote an easier removal of the dough after the baking. The metallization of the receiving surface is made on the inner side of the plastic film by deposition of a thin shielding layer of dielectric material.

The plate is further constituted of a bottom support forming the lower surface of the plate which is adhesively attached to the plastic layer and which includes a comparatively more rigid microwave-inert substrate. The substrate has also a function to insulate the susceptor bottom from the calorific loss, in particular from the heat-sink effect which is produced from the bottom glass tray of the microwave oven. For that, a significant reduction of the heat-sink effect can be obtained when the substrate is a corrugated board. However, the disadvantage of a corrugated board is that it has a tendency to be permanently compressed during the pressing operation of the dough onto the susceptor. The thicker the corrugation, the bigger the problem. Moreover, depending on the size of the apertures, the dough may have tendency to go into the apertures and consequently into the corrugations, thus making the final product difficult to remove after baking. Therefore, we have determined a range of thickness of the corrugated board that lessens the risk of compression while still proving to be effective in decreasing the heat-sink effect. For that, the corrugated board has preferably a thickness of 1 to 1.5 mm. Of course, the other substantially rigid support may also be used to replace the corrugated board such as a simple plate-like cardboard or paperboard.

The invention also encompasses a combination of a susceptor plate and a frozen garnished flat raw dough product arranged thereon; the susceptor plate having a metallized plastic surface onto which is laminated the frozen garnished flat dough product; and the garnished flat dough product comprising a substantially non-garnished dough rim and a garnished centre; characterised in that a plurality of apertures having minimal transverse dimensions of at least 5 mm are distributed within the susceptor plate within a peripheral band having a predetermined width whereas the rest of the plate is free from such apertures and characterised in that the flat dough product is disposed onto the plate so that the peripheral band substantially encompasses the limits of the non-garnished dough rim of the flat dough product.

For a fuller understanding of the present invention, reference should be made to the following detailed description taken in conjunction with the drawings, in which:
Figure 1 is a top view of the preferred embodiment of the improved microwave susceptor of the invention;
Figure 2 is a perspective view of the susceptor shown in Figure 1;
Figure 3 is a cross sectional view of the susceptor of Figure 1 as taken along line A-A;
Figure 4 is a diagrammatic cross section view of the combination of the susceptor and the garnished flat bread before microwave heating;
Figure 5 is a view similar to Figure 4 but after microwave heating.

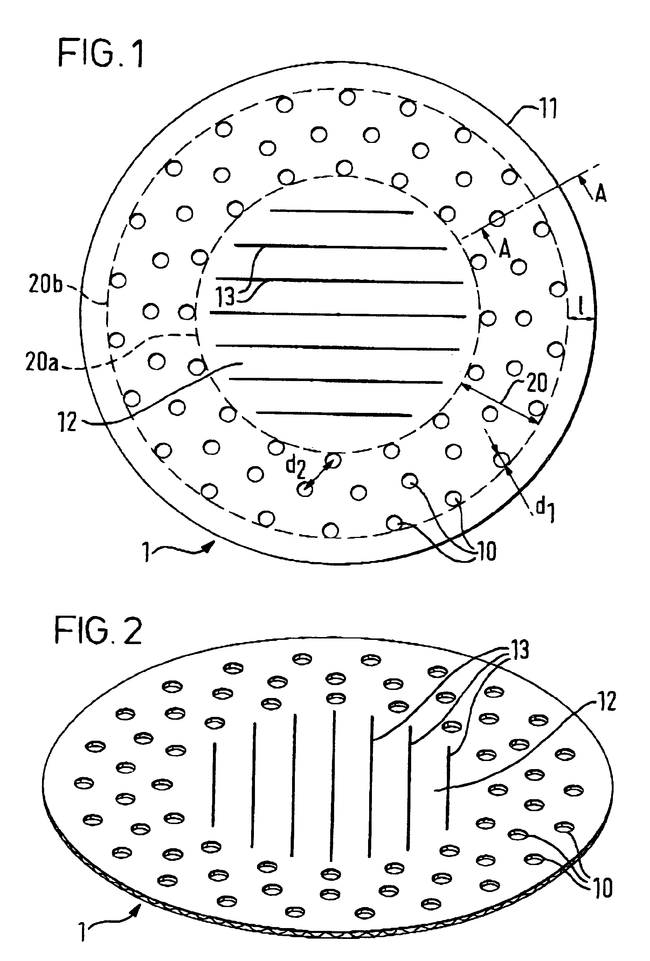

As illustrated in Figures 1 and 2, the susceptor 1 of the invention is preferably a disc-shaped plate which comprises a plurality of apertures or holes 10 entirely circumscribed within a peripheral, preferably annular band 20 of a predetermined width as referenced between dotted internal line 20a and external dotted line 20b. Optimum results have been obtained with circular holes 10 of a diameter d₁ of about 7 mm distributed along a band of 40 mm wide. The disc-plate had a diameter of about 220 mm capable to receive a raw flat garnished dough, more specifically an uncooked pizza, of a diameter of about 200 mm after pressing and slight elasticity shrinking of the dough. The band was preferably distant from the outer edge 11 of the susceptor by a distant 1₁ of about 12 mm. The distribution of the holes was made along three concentric rows of holes. The holes were distributed so as to respect a partition distance d₂, as measured from the centres of the holes, in all dimensions of about 19 mm. The distance between the holes in each row were made different so as to create, after microwave baking, a substantially uneven browning effect close to a traditionally baked pizza. The number of holes was of about 60 within the band. However, it must be kept in mind that all these parameters might slightly vary depending upon the size of the dough product. It has been determined that the concentration of holes within the band area was optimal between about 8 and 15% surface coverage with each aperture having individual surfaces of about 30 to 40 square millimetres.

The centre part 12 of the susceptor was perforated with a plurality of slits 13 organised in a transversal array while the slits are distant of about 15 mm from one another. The length of the slits were ranging from about 50 to 110 mm-long in order to substantially cover the whole centre part 12 of the susceptor which had a diameter of about 120 mm. The slits were made by a cutting tool without significant material removal, just to permit the gas and vapour to escape theretrough during the microwave heating. They were also configured thin so as to make the reflective layer of the susceptor capable to absorb as much energy as possible transferable into thermal conductive heat to ensure a full degree of cooking of the dough in the central part. Alternatively, the thin slits may also be cut in other oriented manner such as in intersection each other or in chevron shape. Very small perforations could also give satisfactory results provided they have a maximum transverse dimension of equal to or less than 1.5 mm.

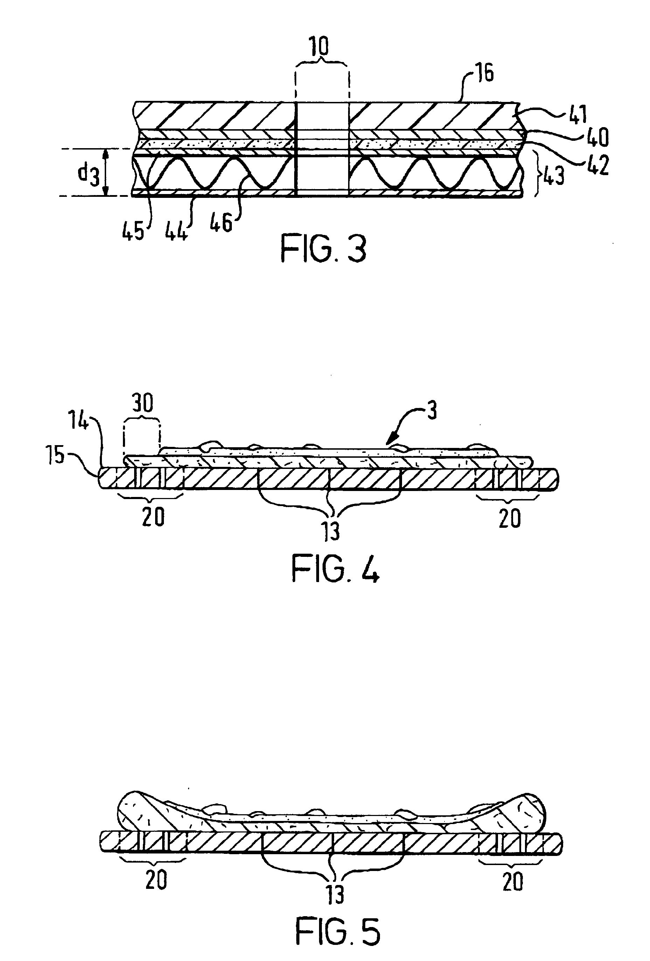

Figure 3 illustrates a preferred structure for the susceptor. The susceptor consists of a microwave interactive layer 40 deposited on the internal surface of a plastic support layer 41. The support layer forms the receiving surface 16 for the dough and it is preferably a foodgrade sheet of siliconized PET, PTFE or any other suitable plastic of about 12 microns. The microwave-interactive layer is a thin deposit of a metallic material, preferably aluminium deposited by any suitable technique such as by vacuum deposition; vapour deposition, cathodic arc deposition, sputtering, etc. The deposited layer has preferably of optical density of 0.19-0.27. Preferably, a substantially rigid or semi-rigid base layer 43 made of a corrugated board is provided which is glued to the metallized side 40 via an adhesive layer 42 such as a vinyl acetate co-polymer adhesive or any other suitable ones. The corrugated board 43 is mainly composed of a corrugated panel 46 sandwiches between two thin flat cardboard panels 44, 45. It is important that the thickness d₃ of the corrugated board is less than 3 mm, preferably of 1 to 1.5 mm so as to prevent the risks of the board to be permanently compressed during the pressing of the dough onto the susceptor's receiving surface 16. The corrugated board is preferred as it reduces the heat sink effect with the microwave oven floor by providing an insulating barrier. The heat sinking may cause non-uniform heating along the dough which could be prejudicial with formation of large cold spots. The corrugated board just ensures that no significant energy is drawn away to the floor. However, other suitable supports may be used such as flat cardboard or paperboard of sufficient thickness.

As clearly apparent from Figure 3, owing to the presence of apertures 10 provided through the all structure of the susceptor, the microwave energy absorption by the interactive layer is consequently decreased in these areas thus leaving more energy available to be absorbed by the dough for generating a better rising of the dough with less browning. The apertures may be made after lamination of the susceptor by any suitable methods known in the art such as punching, calender rolling or any other suitable techniques. The apertures may be modified either in coverage, size, or shape provided they remain within the aforementioned recommended characteristics.

Figure 4 shows the location of the garnished flat dough, more specifically a frozen raw pizza 3, when placed onto the susceptor. We have surprisingly noticed that there was an advantage in pressing the dough directly onto the susceptor. Indeed, the pressure applied during the pressing of the dough ball had a positive influence on the browning and crispness. In particular, pressures of about 30 to 90 bars, preferably 70 bars, corresponding to the measured pressure on the hydraulic press, have given good results. More particularly, a more pronounced browning and improvement of the crispness were obtained compared to a product placed onto the susceptor after having separately been laminated. It is theorised that a better contact is made during pressing between the dough and the receiving surface of the susceptor that would improve the conductive thermal transfers in the areas of contact with the dough.

The uncooked product is so pressed onto the susceptor and garnishing is applied thereon while leaving an ungarnished dough rim 30 of about 8 to 15 mm wide. The rim of the dough must necessarily be placed within the perforated band 20 while a small gap 14 of several millimetres is preferably left free between the circular edge of the product and the edge 15 of the susceptor. This small gap may advantageously serve as a retaining area to maintain the susceptor in place on the conveyor line while the pressing head is removed from the sticking dough layer.

### EXAMPLE:

A frozen pizza product was produced by mixing the following dough ingredients in a Kemper mixer during 1 min at low speed and 4 min at high speed:

| | |
|---|---|
| Flour | 56.8 % by weight |
| Salt | 1.14 % |
| Sugar | 1.14 % |
| Baking powder | 0.57 % |
| Inactive yeast | 0.17 % |
| Baker's yeast | 2.82 % |
| Margarine | 5.17 % |
| Water | 32.19 % |

The dough was then allowed to rest for 30 min in room temperature before it was divided into dough balls of about 170 grams. The balls were individually pressed directly onto the susceptor using a Tomcat multi-press (Model MK 20).

The pieces of pressed dough were then allowed to proof again for 20 min to permit the cellular texture to recover. A thickness of raw dough of 5 to 6mm at the centre and between 9.2 to 11.2 mm at the rim was obtained.

The next stage consisted in garnishing the dough with tomato sauce (Aw of 0.97 and pH of 4.2), cheese such as Emmenthaler type, vegetable cheese, ham, and spices. The garnishing of the dough can be made so as to leave a non-garnished rim of several millimetres. However, the invention is not limited to a strictly non-garnished rim and the dough could also be slightly covered by tomato sauce and optionally cheese while leaving no visible uncovered rim around the pizza.

After garnishing of the dough, the pizzas as laid onto the susceptors were transferred to be deep frozen in a deep freezing tunnel or freezing cells maintained at about -38 degree Celsius. The combination was then shrinkwrapped and placed in a cardboard to closely maintain the susceptor and the product in the right place with no further risks to see the dough significantly moving with respect to the susceptor.

The products as produced above were submitted to a microwave-baking test. The raw pizza was heated in a 750-watt microwave oven for about 390 seconds. The degree of rising of the rim 30 of the pizza was comparatively measured to assess the importance of the apertured pattern in the susceptor of the invention depending upon varied parameters such as the number of rows, the diameter of the holes (d₁), and the partition distance (d₂) for the susceptor described above. The results are included in the following table:

**TABLE**

| | Number of Rows | d₁ (in mm) | d₂ (in mm) | Rim rise ( in mm)^{*} |
|---|---|---|---|---|
| **Prior Art** | | | | |
| No holes | ----- | ----- | ----- | 5.7 |

| **Invention** | | | | |
|---|---|---|---|---|
| Example 1 | 2 | 6 | 1.9 | 6.08 |
| Example 2 | 3 | 6 | 2.5 | 6.3 |
| Example 3 | 3 | 6 | 1.9 | 6.9 |
| Example 4 | 3 | 7 | 1.9 | 8.5 |
| Example 5 | 2 | 10 | 1.9 | 7.47 |

| **Comparative** | | | | |
|---|---|---|---|---|
| Example 6 | 3 | 4 | 1.0 | 5.9 |
| Example 7 | 3 | 3 | 1.0 | 5.9 |

| | | | | |
|---|---|---|---|---|
| ^{*} Rim rise (in mm): represents the variation of thickness between the final rim thickness after baking and the rim thickness of the frozen raw dough. | | | | |

Figure 5 illustrates the combination of the invention after the heating has been completed. As a result of the heating operation, we noticed that the apertures within the band as defined earlier helps the browning by forming brown regions with a little fuzzy effect around the circles, thus making the rim more natural looking in a manner similar to a conventional pizza product heated in a convection oven. The rim of the crusts in Examples 3-5 has a very nice swollen appearance and tastes soft in the middle but crispy in surface. The centre part of the crusts is well cooked with no overburned regions and no apparent soggy areas. The centre point (a circular surface of about diameter 30-40 mm) of the dough looks a bit more brown than the rest of the centre part as by construction, the distance between the brown edge and the centre is about half a wave-length so that more microwave energy concentrates toward the centre of the cavity than in the intermediate regions.

It should be recognised that although the invention has found a direct satisfactory application for the microwave baking of frozen pizza products, the invention can be extended to other types of dough based products which have a similar dough structure such as flamed pie, quiche Lorraine or other types of garnished flat dough.

## Claims

1. A susceptor for heating a garnished flat dough in a microwave oven comprising a metallized plate, **characterised in that** the plate comprises a plurality of apertures forming gas and microwave energy permeable areas which are evenly or randomly disposed in the peripheral area of the plate; with each aperture having a transverse dimension of at least 5 mm.

2. A susceptor according to claim 1, **characterised in that** the plurality of apertures is confined within a peripheral band having a predetermined width whereas the rest of the plate is free from such apertures.

3. A susceptor according to claim 2, **characterised in that** the plurality of apertures is confined within a peripheral band having a width of 50 mm or less, preferably of about 40 mm, and distant from the nearest edge of the plate of 10 to 20 mm, preferably of about 15 mm.

4. A susceptor according to claim 3, **characterised in that** the plate has a disc shape and has a diameter of 200 to 230, preferably 220 mm.

5. A susceptor according to any one of claims 2 to 4, characterised the plate comprises in the central area as externally delimited by the peripheral band a plurality of perforations having a maximum transverse dimension of less than 1.5 mm.

6. A susceptor according to claim 5, **characterised in that** said perforations are slits having length of at least 10-mm long.

7. A susceptor according to any the preceding claims, **characterised in that** said plurality of apertures are circles or ovals or regular polygonal or irregular polygonal shapes or any combinations thereof.

8. A susceptor according to any of the preceding claims, **characterised in that** the apertures have a maximum length equal to or lower than 15 mm and are distributed so as to respect a partition distance in the range of 10 to 38 mm.

9. A susceptor according to any of the preceding claims, **characterised in that** the plate is constituted of a laminate comprising a receiving surface onto which is pressed the garnished flat dough; said receiving surface having a food grade metallized plastic layer and, a bottom support forming the lower surface of the plate adhesively attached to the plastic layer and including a comparatively more rigid microwave-inert substrate.

10. A susceptor according to any of claim 9, **characterised in that** said microwave-inert substrate is a flat or corrugated cardboard.

11. A susceptor according to claim 10, **characterised in that** when the cardboard is corrugated, its thickness is in the range of 1 to 1.5 mm.

12. A combination of a susceptor plate and an uncooked garnished flat dough product arranged thereon; the susceptor plate having a metallized plastic surface onto which is laminated the frozen garnished flat dough product; and the garnished flat dough product comprising a substantially non-garnished dough rim and a garnished centre; **characterised in that** a plurality of apertures having minimal transverse dimensions of at least 5 mm is distributed within the susceptor plate within a peripheral band having a predetermined width whereas the rest of the plate is free from such apertures and **characterised in that** the flat dough product is disposed onto the plate so that the peripheral band substantially encompasses the limits of the non-garnished dough rim of the flat dough product.

13. A combination according to claim 12, **characterised in that** the apertures have a minimal transverse direction in the range of 5 to 15 mm, preferably about 7 mm, and a maximum length equal to 15 mm or lower, and are distributed so as to respect a partition distance in the range of 10 to 38 mm.

14. A combination according to claim 12, **characterised in that** the width of the band is in the range of 50 to 35 mm, preferably about 40 mm.

15. A combination according to claim 14, **characterised in that** the proportion of the area covered by the apertures in the band of the susceptor with respect to the total surface of the band is in a range of 8 to 15 % surface coverage, for apertures having individual surfaces of 30 to 40 square millimetre.

16. A combination according to claim 12, **characterised in that** the garnished flat dough product is frozen.

17. A combination according to claim 12, **characterised in that** the garnished flat dough product is a pizza.

18. A combination according to claim 12, **characterised in that** the dough is laminated directly onto the susceptor by application of pressure.
